# EUROPÄISCHE PATENTSCHRIFT

(11) **EP 3 490 944 B1**
(45) Veröffentlichungstag und Bekanntmachung des Hinweises auf die Patenterteilung: **03.12.2025**
(21) Anmeldenummer: 17740290.6
(22) Anmeldetag: 29.06.2017
(51) Int. Cl.: C03B 11/10

(54) **VORFORMSTATION FÜR EINE I. S. (INDIVIDUAL-SECTION) GLASPRODUKTIONSMASCHINE**
PREFORMING STATION FOR AN IS (INDIVIDUAL SECTION) GLASS PRODUCTION MACHINE
POSTE DE PRÉFORMAGE POUR UNE MACHINE SECTIONNELLE (I.S) DE PRODUCTION DE VERRE

(30) Priorität: 28.07.2016 DE 102016009556
(43) Veröffentlichungstag der Anmeldung: 05.06.2019
(73) Patentinhaber: Verallia Packing SAS, 92400 Courbevoie (FR)
(72) Erfinder: SCHAD, Manuel, 88410 Bad Wurzach (DE); LUTZ, Thomas, 88339 Bad Waldsee (DE); MAYER, Jürgen, 88339 Bad Waldsee (DE); VÖLKEL, Bernhard, 88410 Bad Wurzach (DE)
(74) Vertreter: Moser Götze & Partner Patentanwälte mbB
(86) Internationale Anmeldenummer: PCT/EP2017/000782
(87) Internationale Veröffentlichungsnummer: WO 2018/019402

(56) Entgegenhaltungen:
- DATABASE WPI Week 201556, 13 August 2015 Derwent World Patents Index; AN 2015-462644, XP002774955
- DATABASE WPI Week 197915, 3 March 1979 Derwent World Patents Index; AN 1979-28427B, XP002774956

## Beschreibung

Die Erfindung bezieht sich auf eine Vorformstation einer I.S. (Individual-Section) Glasproduktionsmaschine mit zumindest einer Vorform, zu der ein Vorformboden und ein Mündungsteil gehören, und einem Vorformhalter mit Vorformhalterarmen.

Bei bekannten entsprechenden Vorformstationen wird der Innenraum der Vorform durch den Vorformboden und das Mündungsteil sowie dazwischen angeordnete Vorformhälften gebildet, die an den Vorformhalterarmen gelagert und mittels der Vorformhalterarme beweglich sind.

Beim Betrieb derartiger Vorformstationen hat sich herausgestellt, dass insbesondere bei der Herstellung vergleichsweise niedriger und kompakter Glasartikel, bei denen ein Pegel der Vorformstation mit einem vergleichsweise hohen Druck bewegt wird, die hergestellten Glasartikel Unregelmäßigkeiten wie Wülste, Grate, Vorsprungkanten etc. insbesondere an den Übergangsstellen zwischen den den Innenraum der Vorform ausbildenden Bauteilen derselben aufwiesen.

Die WO 2015118663 A1 und die JPS 5428319 A zeigen jeweils Vorformstationen von Glasproduktionsmaschinen, bei denen die Innenkontur der Vorform mittels eines Formoberteils und eines Formunterteils ausgebildet wird. Zu diesen bekannten Vorformstationen gehören weder zwischen Formober- und -unterteil angeordnete Vorformhälften noch derartigen Vorformhälften zugeordnete Vorformhalterarme eines Vorformhalters.

Ausgehend von dem vorstehend geschilderten Stand der Technik liegt der Erfindung die Aufgabe zugrunde, die gattungsgemäße Vorformstation für eine I.S. Glasproduktionsmaschine derart weiterzubilden, dass auch vergleichsweise niedrige und kompakte Glasartikel mit hoher Qualität und ohne Unregelmäßigkeiten wie Wülste, Grate, Vorsprungkanten etc. hergestellt werden können.

Diese Aufgabe wird erfindungsgemäß dadurch gelöst, dass der Vorformboden und das Mündungsteil an ihren einander zugewandten Kanten miteinander in Anlage bringbar sind, sodass sie die Innenkontur der Vorform vorformhälftenfrei ausbilden, und dass der Vorformboden und das Mündungsteil während eines Pressvorgangs mittels der Vorformhalterarme aneinander fixiert sind.

Im Falle der erfindungsgemäß ausgestalteten Vorformstation wird auf die im Stand der Technik üblichen Vorformhälften verzichtet. Die Vorformhalterarme der Vorformstation werden eingesetzt, um ein stabiles und festes Gefüge zwischen Vorformboden einerseits und Mündungsteil andererseits zu schaffen. Hierdurch wird gewährleistet, dass die einander zugewandten Kanten des Vorformbodens einerseits und des Mündungsteils andererseits so fest und eng aneinander anliegen, dass an der der Übergangsstelle zwischen Vorformboden und Mündungsteil zugeordneten Außenfläche des herzustellenden Glasartikels keinerlei Unregelmäßigkeiten der genannten Art entstehen. Die mit der erfindungsgemäß ausgestalteten Vorformstation auf der I.S. Glasproduktionsmaschine hergestellten Glasartikel weisen somit auch dann eine hohe Qualität auf, wenn sie vergleichsweise niedrig und kompakt sind.

Gemäß einer vorteilhaften Ausführungsform der erfindungsgemäßen Vorformstation weist der Vorformboden einen in Richtung zum Mündungsteil vorstehenden Formabschnitt auf, mittels dem ein zwischen einem Boden und einer Mündung eines Glasartikels sich erstreckender Körperabschnitt des Glasartikels ausbildbar ist.

Alternativ ist es möglich, dass das Mündungsteil einen in Richtung zum Vorformboden vorstehenden Formabschnitt aufweist, mittels dem ein zwischen einem Boden und einer Mündung eines Glasartikels sich erstreckender Körperabschnitt desselben ausbildbar ist.

Gemäß einer weiteren alternativen Ausführungsform der erfindungsgemäßen Vorformstation können der Vorformboden und das Mündungsteil jeweils einen in Richtung zum Mündungsteil bzw. zum Vorformboden vorstehenden Formabschnitt aufweisen, mittels welchen Formabschnitten ein zwischen einem Boden und einer Mündung des Glasartikels sich erstreckender Körperabschnitt desselben ausbildbar ist.

In einfacher Weise sind die Vorformhalterarme zur Herstellung eines festen Gefüges zwischen Vorformboden und Mündungsteil einsetzbar, wenn jeder Vorformhalterarm einen Oberträger aufweist, der beim Schließen des Vorformhalters mit einer unteren Druckanlagefläche in Druckanlage an eine äußere Druckanlagefläche des Vorformbodens bringbar ist.

Eine allmähliche Erhöhung des seitens jedes Vorformhalterarms auf den Vorformboden ausgeübten Drucks wird erzielt, wenn die oberträgerseitigen Druckanlageflächen und die vorformbodenseitigen Druckanlageflächen angeschrägt sind.

Eine Fixierung des Mündungsteils der erfindungsgemäßen Vorformstation ist in einfacher Weise erreichbar, wenn jeder Vorformhalterarm einen Unterträger aufweist, der beim Schließen des Vorformhalters mit einer Ausnehmung eines der Führung eines Pegels der Vorformstation dienenden Hülsenzylinderaufbaus in Eingriff bringbar ist.

Auch bei der Fixierung des Mündungsteils ist es vorteilhaft, wenn eine Führungsfläche der hülsenzylinderaufbauseitigen Ausnehmung und eine dieser zugeordnete unterträgerseitige Anlagefläche angeschrägt sind.

Eine zuverlässige Fixierung und ein entsprechend festes und stabiles Gefüge zwischen Vorformboden und Mündungsteil ist auch erreichbar, wenn jedem Vorformhalterarm eine Spannhebelvorrichtung zugeordnet ist, mittels der der Vorformboden und das Mündungsteil zusammen spannbar sind, wobei an jedem Vorformhalterarm eine Führung ausgebildet ist, mittels der zwei Spannhebel der ihm zugeordneten Spannhebelvorrichtung zum Einspannen des Gefüges aus Vorformboden und Mündungsteil aufeinander zu bewegbar sind.

Vorteilhaft weist jede Spannhebelvorrichtung eine Federeinrichtung auf, mittels der die beiden Spannhebel der Spannhebelvorrichtung voneinander entfernbar sind.

Eine Halterung der Spannhebelvorrichtung ist mit einem vergleichsweise geringen technisch-konstruktiven Aufwand realisierbar, wenn die Spannhebelvorrichtung den ihr zugeordneten Vorformhalterarm im Bereich der Führung durchragt und außerhalb des Vorformhalterarms an einem Kühlluftaufbau der Vorformstation gehaltert ist.

Eine weitere Vereinfachung und eine besonders kompakte Ausgestaltung der erfindungsgemäßen Vorformstation ist erreichbar, wenn das Mündungsteil durch eine dem Vorformboden zugewandte Stirnseite eines der Vorform zugeordneten Pegels der Vorformstation gebildet ist.

Eine Fixierung des Vorformbodens am durch die dem Vorformboden zugewandte Stirnseite des Pegels kann mit einem vergleichsweise geringen Aufwand erreicht werden, wenn an den Vorformhalterarmen eine vorzugsweise pneumatische Andruckzylindervorrichtung gehaltert ist, mittels der der Vorformboden und das vom Pegel ausgestaltete Mündungsteil zusammendrückbar sind.

Zur Ausgestaltung mit Abteilungen bzw. Kompartments versehenen Glasartikeln ist es vorteilhaft, wenn der Pegel an seiner freien Stirnfläche zumindest eine Stegausnehmung aufweist.

Zu gleichen Zwecken kann der Vorformboden auf seiner Bodeninnenseite zumindest einen Steg aufweisen, dem eine diesen Steg mit Abstand umgebende Stegausnehmung der Stirnseite des der Vorform zugeordneten Pegels der Vorformstation zugeordnet ist.

Ein bündiger Abschluss eines derartigen Glasartikels mit Abteilungen bzw. Kompartments im Mündungsbereich des Glasartikels kann erreicht werden, wenn die einer freien Endkante des Stegs gegenüberliegende Grundfläche der dem Steg zugeordneten Stegausnehmung mit den eine Oberkante des Glasartikelrands ausbildenden Teilen der Vorform fluchtet.

Im Folgenden wird die Erfindung anhand von Ausführungsformen unter Bezugnahme auf die Zeichnung näher erläutert. Es zeigen:
- Figur 1: eine Prinzipdarstellung von für eine erste Ausführungsform einer erfindungsgemäßen Vorformstation für eine I.S. Glasproduktionsmaschine wesentlichen Bauteilen im Schnitt;
- Figur 2: eine Figur 1 entsprechende Prinzipdarstellung von für eine zweite Ausführungsform der erfindungsgemäßen Vorformstation für eine I.S. Glasproduktionsmaschine wesentlichen Bauteilen im Schnitt; und
- Figur 3: eine den Figuren 1 und 2 etwa entsprechende Prinzipdarstellung von für eine dritte Ausführungsform der erfindungsgemäßen Vorformstationfür eine I.S. Glasproduktionsmaschine wesentlichen Bauteilen im Schnitt.

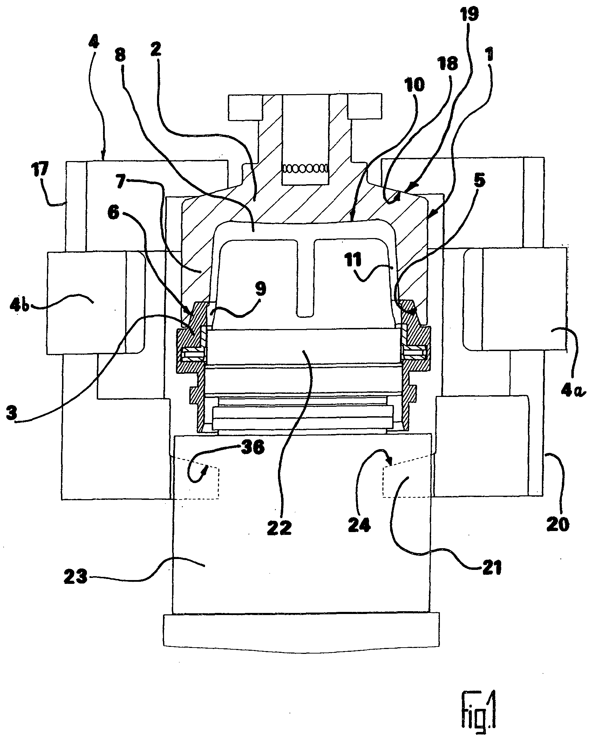

Bei einer in Figur 1 hinsichtlich ihrer für die vorliegende Erfindung wesentlichen Bauteile gezeigten Vorformstation für eine I.S. (Individual-Section) Glasproduktionsmaschine, die im übrigen in den Zeichnungen nicht dargestellt ist, ist eine Vorform 1 vorgesehen, deren Innenkontur der Außenkontur eines mittels der Vorform 1 herzustellenden Glasartikels 10 entspricht.

Zu der Vorform 1 gehören ein Vorformboden 2 und ein Mündungsteil 3. Der Vorformboden 2 und das Mündungsteil 3 der Vorform 1 bilden ohne die sonst bei I.S. Glasproduktionsmaschinen üblichen Vorformhälften die Innenkontur der Vorform 1.

Entsprechend ist im Falle der in Figur 1 dargestellten Vorform 1 vorgesehen, dass bei geschlossenem Zustand der Vorform 1 eine untere Kante 5 des Vorformbodens 2 gegen eine obere Kante 6 des Mündungsteils 3 anliegt.

Zur Ausgestaltung eines zwischen einem Boden 8 und einer Mündung 9 vorhandenen Körperabschnitts 11 des Glasartikels 10 weist bei der in Figur 1 gezeigten Ausführungsform der erfindungsgemäßen Vorformstation der Vorformboden 2 einen Formabschnitt 7 auf, der vom eigentlichen Bodenabschnitt des Vorformbodens 2 in Richtung zum Mündungsteil 3 der Vorform 1 vorsteht und an dessen freiem Ende die untere Kante 5 des Vorformbodens 2 ausgebildet ist.

Die vorstehend geschilderte Vorformstation kommt insbesondere dann zum Einsatz, wenn vergleichsweise kompakte Glasartikel 10 mit einer vergleichsweise geringen Längserstreckung, die in Längsrichtung der Vorform 1 verläuft, herzustellen sind.

Um zu gewährleisten, dass aus dem Vorformboden 2 und dem Mündungsteil 3 der Vorform 1 ein festes Gefüge erstellt wird, so dass keine Unregelmäßigkeiten wie Wülste, Grate, Vorsprungkanten etc. an denjenigen Abschnitten des herzustellenden Glasartikels 10 entstehen, die an den aneinander anliegenden Kanten 5, 6 des Vorformbodens 2 und des Mündungsteils 3 angeordnet sind, sind üblicherweise der Halterung von Vorformhälften einer Vorform einer I.S. Glasproduktionsmaschine dienende Vorformhalterarme 4a, 4b eines Vorformhalters 4 der Vorform 1 wie folgt ausgebildet:
Beide Vorformhalterarme 4a, 4b haben einen Oberträger 17, an dem eine untere Druckanlagefläche 18 ausgebildet ist. Diese untere Druckanlagefläche ist angeschrägt, wie dies aus Figur 1 entnehmbar ist.

Entsprechend ist an der oberen Außenfläche des Vorformbodens 2 eine äußere Druckanlagefläche 19 ausgebildet, die in gleicher Weise angeschrägt ist wie die untere Druckanlagefläche 18 des Oberträgers. Je weiter die beiden Vorformhalterarme 4a, 4b des Vorformhalters 4 in Richtung auf die mittlere Längsachse der Vorform 1 bewegt werden, umso weiter wird der Vorformboden 2 der Vorform 1 in Richtung auf das Mündungsteil 3 der Vorform 1 in abwärtiger Richtung gedrückt.

Um ein Ausweichen des Mündungsteils 3 der Vorform beim Andrücken des Vorformbodens 2 an das Mündungsteil 3 zu verhindern, weisen die beiden Vorformhalterarme 4a, 4b Unterträger 20 auf. Die Unterträger 20 haben an in Richtung zur Längsachse der Vorform 1 vorstehenden Vorsprüngen eine Anlagefläche 24. Die Anlagefläche 24 ist angeschrägt.

In einem Hülsenzylinderaufbau 23, der einem Pegel 22 der Vorform 1 zugeordnet ist, sind an den den Vorsprüngen der Unterträger 20 entsprechenden Positionen Ausnehmungen 21 ausgebildet. Die Ausnehmungen 21 haben an ihren den unterträgerseitigen Anlageflächen 24 entsprechenden Flächen Führungsflächen 36, die entsprechend der Anschrägung der unterträgerseitigen Anlageflächen 24 ebenfalls schräg angeordnet sind.

Wenn die Unterträger 20 mit ihren Vorsprüngen in die hülsenzylinderaufbauseitigen Ausnehmungen 21 geraten, wird das Mündungsteil 3 der Vorform 1 fixiert. Zwischen dem Mündungsteil 3 und dem Vorformboden 2 der Vorform 1 wird ein festes Gefüge geschaffen, so dass die vorformbodenseitige Kante 5 und die mündungsteilseitige Kante 6 eng aneinander anliegen. Entsprechend werden Unregelmäßigkeiten wie Wülste, Grate, Vorsprungkanten etc. am herzustellenden Glasartikel 10 vermieden.

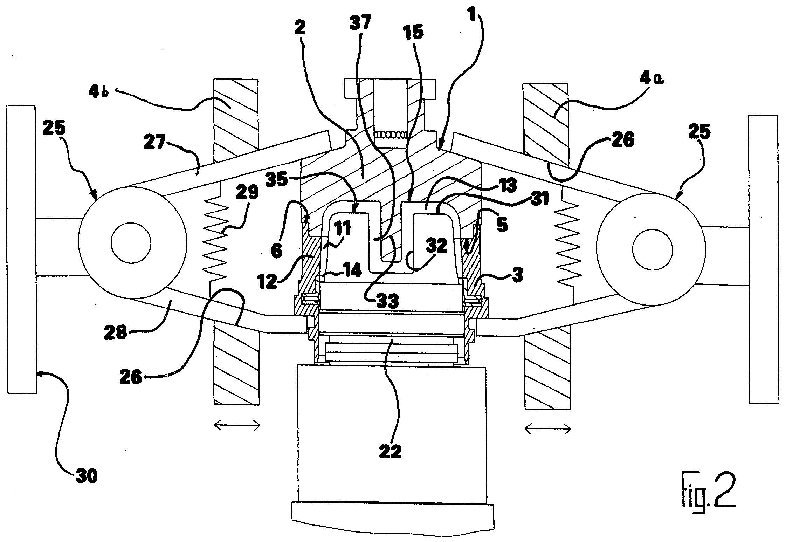

Bei einer in Figur 2 hinsichtlich ihrer für die vorliegende Erfindung wesentlichen Bauteile gezeigten Vorformstation für eine I.S. Glasproduktionsmaschine ist die Vorform 1 vorgesehen, deren Innenkontur der Außenkontur eines mittels der Vorform 1 herzustellenden Glasartikels 15 entspricht.

Zu der Vorform 1 gehören der Vorformboden 2 und das Mündungsteil 3. Der Vorformboden 2 und das Mündungsteil 3 der Vorform 1 bilden ohne die sonst bei I.S. Glasproduktionsmaschinen üblichen Vorformhälften die Innenkontur der Vorform 1.

Entsprechend ist im Falle der in Figur 2 dargestellten Vorform 1 vorgesehen, dass bei geschlossenem Zustand der Vorform 1 die untere Kante 5 des Vorformbodens 2 gegen die obere Kante 6 des Mündungsteils 3 anliegt.

Zur Ausgestaltung des zwischen einem Boden 13 und einer Mündung 14 vorhandenen Körperabschnitts 11 des Glasartikels 15 weist bei der in Figur 2 gezeigten Ausführungsform der erfindungsgemäßen Vorformstation das Mündungsteil 3 einen Formabschnitt 12 auf, der vom die eigentliche Mündung 14 ausbildenden Abschnitt des Mündungsteils 3 in Richtung zum Vorformboden 2 der Vorform 1 vorsteht und an dessen freiem Ende die obere Kante 6 des Mündungsteils 3 ausgebildet ist.

Die vorstehend geschilderte Vorformstation kommt wie die anhand von Figur 1 geschilderte Vorformstation insbesondere dann zum Einsatz, wenn vergleichsweise kompakte Glasartikel 15 mit einer vergleichsweise geringen Längserstreckung, die in Längsrichtung der Vorform 1 verläuft, herzustellen sind.

Um zu gewährleisten, dass aus dem Vorformboden 2 und dem Mündungsteil 3 der Vorform ein festes Gefüge erstellt wird, so dass keine Unregelmäßigkeiten wie Wülste, Grate, Vorsprungkanten etc. an denjenigen Abschnitten des herzustellenden Glasartikels 15 entstehen, die an den einander anliegenden Kanten 5, 6 des Vorformbodens 2 und des Mündungsteils 3 angeordnet sind, sind die üblicherweise der Halterung von Vorformhälften einer Vorform einer I.S. Glasproduktionsmaschine dienenden Vorformhalterarme 4a, 4b der Vorform 1 wie folgt ausgebildet:
Beide Vorformhalterarme 4a, 4b haben eine Unterbrechung, mittels der eine Führung 26 ausgebildet wird. Die Führung 26 wird durch zwei in jedem Vorformhalterarm 4a, 4b zur Begrenzung der Durchbrechung ausgebildete Schrägflächen gebildet. In der Führung 26 der beiden Vorformhalterarme 4a, 4b ist jeweils eine Spannhebelvorrichtung 25 angeordnet.

Zu der Spannhebelvorrichtung 25 gehören zwei Spannhebel 27, 28, die mit ihren Außenseiten gegen die vorstehend erwähnten Schrägflächen der Führung 26 anliegen. Die beiden Spannhebel 27, 28 werden mittels einer Federeinrichtung 29 voneinander weg vorgespannt.

In Radialrichtung der Vorform 1 gesehen außerhalb der Vorformhalterarme 4a, 4b ist die Spannhebelvorrichtung 25 an einem Kühlluftaufbau 30 der Vorformstation der I.S. Glasproduktionsmaschine gehaltert.

Mit seinem freien Ende liegt der in Figur 2 obere Spannhebel 27 gegen eine obere Außenfläche des Vorformbodens 2 an. Entsprechend liegt der Spannhebel 28 mit seinem freien Ende gegen eine untere Außenfläche des Mündungsteils 3 an.

Wenn die beiden Vorformhalterarme 4a, 4b in Richtung zur Längsachse der Vorform 1 hin bewegt werden, werden die beiden Spannhebel 27, 28 der beiden Spannhebelvorrichtungen 25 gegen die Kraft der Federeinrichtung 29 aufeinander zu bewegt. Hierdurch werden der Vorformboden 2 und das Mündungsteil 3 der Vorform 1 zusammengedrückt.

Zwischen dem Mündungsteil 3 und dem Vorformboden 2 der Vorform wird so ein festes Gefüge geschaffen, so dass die vorformbodenseitige Kante 5 und die mündungsteilseitige Kante 6 eng aneinander anliegen. Entsprechend werden Unregelmäßigkeiten wie Wülste, Grate, Vorsprungkanten etc. am herzustellenden Glasartikel 15 vermieden.

Bei der in Figur 2 gezeigten Ausführungsform ist an einer Stirnseite 35 des der Vorform 1 zugeordneten Pegels 22 in der dort vorgesehenen freien Stirnfläche 31 eine Stegausnehmung 32 ausgebildet. Der Stegausnehmung 32 ist ein vorformbodenseitiger Steg 33 zugeordnet, der in die pegelseitige Stegausnehmung 32 vorsteht. Mittels des Zusammenwirkens zwischen pegelseitiger Stegausnehmung 32 einerseits und vorformbodenseitigem Steg 33 andererseits wird etwa mittig des herzustellenden Glasartikels 15 ein von dessen Boden 13 nach oben vorstehender Vorsprung 37 geschaffen, der zum Boden 13 des Glasartikels 15 hin geöffnet und damit hohl ist.

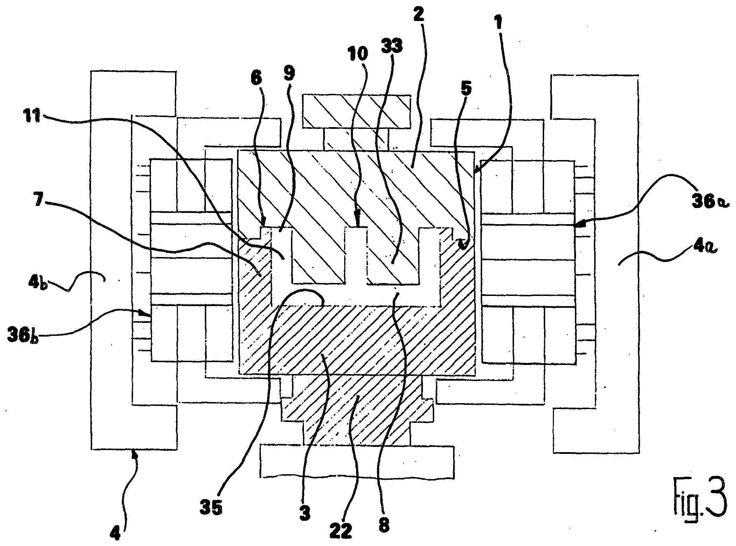

Bei der in Figur 3 hinsichtlich ihrer für die vorliegende Erfindung wesentlichen Bauteile gezeigten Vorformstation für eine I.S. Glasproduktionsmaschine ist die Vorform 1 vorgesehen, deren Innenkontur der Außenkontur eines mittels der Vorform 1 herzustellenden Glasartikels 10 entspricht.

Zu der Vorform 1 gehören der die Mündung 9 des Glasartikels 10 ausbildende Vorformboden 2 und das den Boden 8 des Glasartikels 10 ausbildende Mündungsteil 3, das mittels einer dem Vorformboden 2 zugewandten Stirnseite 35 des der Vorform 1 zugeordneten Pegels 22 der Vorformstation gebildet ist.

Der Vorformboden 2 und das an der Stirnseite 35 des Pegels 22 ausgebildete Mündungsteil 3 der Vorform 1 bilden ohne die sonst bei I.S.

Glasproduktionsmaschinen üblichen Vorformhälften die Innenkontur der Vorform 1.

Entsprechend ist im Falle der in Figur 3 dargestellten Vorform vorgesehen, dass bei geschlossenem Zustand der Vorform die untere Kante 5 des Vorformbodens 2 gegen die obere Kante 6 des an der Stirnseite 35 des Pegels 22 ausgebildeten Mündungsteils 3 anliegt.

Zur Ausgestaltung des zwischen dem Boden 8 und der Mündung 9 vorhandenen Körperabschnitts 11 des Glasartikels 10 weist bei der in Figur 3 gezeigten Ausführungsform der erfindungsgemäßen Vorformstation das an der Stirnseite 35 des Pegels 22 ausgebildete Mündungsteil den Formabschnitt 7 auf, der vom Mündungsteil 3 in Richtung auf den Vorformboden 2 der Vorform 1 vorsteht und an dessen freiem Ende die obere Kante 6 des Mündungsteils 3 ausgebildet ist.

Die vorstehend geschilderte Vorformstation kommt wie die beiden anhand der Figuren 1 und 2 geschilderten Vorformstationen insbesondere dann zum Einsatz, wenn vergleichsweise kompakte Glasartikel 10 mit einer vergleichsweise geringen Längserstreckung, die in Längsrichtung der Vorform 1 verläuft, herzustellen sind.

Um zu gewährleisten, dass aus dem Vorformboden 2 und dem Mündungsteil 3 der Vorform ein festes Gefüge erstellt wird, so dass keine Unregelmäßigkeiten wie Wülste, Grate, Vorsprungkanten etc. an denjenigen Abschnitten des herzustellenden Glasartikels 10 entstehen, die an den einander anliegenden Kanten 5, 6 des Vorformbodens 2 und des Mündungsteils 3 angeordnet sind, werden in bzw. an den üblicherweise der Halterung von Vorformhälften einer Vorform einer I.S. Glasproduktionsmaschine dienenden Vorformhalterarmen 4a, 4 b des Vorformhalters 4 der Vorform 1 Andruckzylindervorrichtungen 36a, 36b gelagert. Mittels dieser Andruckzylindervorrichtungen 36a, 36b sind bei entsprechender Beaufschlagung derselben der Vorformboden 2 und das an der Stirnseite 35 des Pegels 22 vorgesehene Mündungsteil 3 der Vorform 1 zusammendrückbar.

Entsprechend wird zwischen dem Mündungsteil 3 und dem Vorformboden 2 der Vorform ein festes Gefüge geschaffen, so dass die vorformbodenseitige Kante 5 und die mündungsteilseitige Kante 6 eng aneinander anliegen. Unregelmäßigkeiten wie Wülste, Grate, Vorsprungkanten etc. am herzustellenden Glasartikel 10 werden so vermieden.

## Patentansprüche

1. Vorformstation einer I.S. (Individual-Section) Glasproduktionsmaschine, mit zumindest einer Vorform (1), zu der ein Vorformboden (2) und ein Mündungsteil (3) gehören, und einem Vorformhalter (4) mit Vorformhalterarmen (4a, 4b), **dadurch gekennzeichnet, dass** der Vorformboden (2) und das Mündungsteil (3) an ihren einander zugewandten Kanten (5, 6) miteinander in Anlage bringbar sind, sodass sie die Innenkontur der Vorform (1) vorformhälftenfrei ausbilden, und dass der Vorformboden (2) und das Mündungsteil (3) während eines Pressvorgangs mittels der Vorformhalterarme (4a, 4b) aneinander fixiert sind.

2. Vorformstation nach Anspruch 1, bei der der Vorformboden (2) einen in Richtung zum Mündungsteil (3) vorstehenden Formabschnitt (7) aufweist, mittels dem ein zwischen einem Boden (8) und einer Mündung (9) eines Glasartikels (10) sich erstreckender Körperabschnitt (11) desselben ausbildbar ist.

3. Vorformstation nach Anspruch 1, bei der das Mündungsteil (3) einen in Richtung zum Vorformboden (2) vorstehenden Formabschnitt (12) aufweist, mittels dem ein zwischen einem Boden (13) und einer Mündung (14) eines Glasartikels (15) sich erstreckender Körperabschnitt desselben ausbildbar ist.

4. Vorformstation nach einem der Ansprüche 1 bis 3, bei der der Vorformboden (2) und das Mündungsteil (3) jeweils einen in Richtung zum Mündungsteil (3) bzw. zum Vorformboden (2) vorstehenden Formabschnitt aufweisen, mittels welchen Formabschnitten ein zwischen einem Boden und einer Mündung des Glasartikels sich erstreckender Körperabschnitt desselben ausbildbar ist.

5. Vorformstation nach einem der Ansprüche 1 bis 4, bei der jeder Vorformhalterarm (4a, 4b) einen Oberträger (17) aufweist, der beim Schließen des Vorformhalters (4) mit einer unteren Druckanlagefläche (18) in Druckanlage an eine äußere Druckanlagefläche (19) des Vorformbodens (2) bringbar ist.

6. Vorformstation nach Anspruch 5, bei der die oberträgerseitigen Druckanlagefläche (18) und die vorformbodenseitigen Druckanlagefläche (19) angeschrägt sind.

7. Vorformstation nach einem der Ansprüche 1 bis 6, bei der jeder Vorformhalterarm (4a, 4b) einen Unterträger (20) aufweist, der beim Schließen des Vorformhalters (4) mit einer Ausnehmung (21) eines der Führung eines Pegels (22) der Vorformstation dienenden Hülsenzylinderaufbaus (23) in Eingriff bringbar ist.

8. Vorformstation nach Anspruch 7, bei der eine Führungsfläche (36) der hülsenzylinderaufbauseitigen Ausnehmung (21) und eine dieser zugeordnete unterträgerseitige Anlagefläche (24) angeschrägt sind.

9. Vorformstation nach einem der Ansprüche 1 bis 4, bei der jedem Vorformhalterarm (4a, 4b) eine Spannhebelvorrichtung (25) zugeordnet ist, mittels der der Vorformboden (2) und das Mündungsteil (3) zusammenspannbar sind, wobei an jedem Vorformhalterarm (4a, 4b) eine Führung (26) ausgebildet ist, mittels der zwei Spannhebel (27, 28) der ihm zugeordneten Spannhebelvorrichtung (25) zum Einspannen des Gefüges aus Vorformboden (2) und Mündungsteil (3) aufeinander zu bewegbar sind.

10. Vorformstation nach Anspruch 9, bei der jede Spannhebelvorrichtung (25) eine Federeinrichtung (29) aufweist, mittels der die beiden Spannhebel (27, 28) der Spannhebelvorrichtung (25) von einander entfernbar sind.

11. Vorformstation nach Anspruch 9 oder 10, bei der die Spannhebelvorrichtung (25) den ihr zugeordneten Vorformhalterarm (4a, 4b) im Bereich der Führung (26) durchragt und außerhalb des Vorformhalterarms (4a, 4b) an einem Kühlluftaufbau (30) der Vorformstation gehaltert ist.

12. Vorformstation nach Anspruch 1 oder 2, bei der das Mündungsteil (3) durch eine dem Vorformboden (2) zugewandte Stirnseite (35) eines der Vorform (1) zugeordneten Pegels (22) der Vorformstation gebildet ist.

13. Vorformstation nach Anspruch 12, bei der an den Vorformhalterarmen (4a, 4b) eine vorzugsweise pneumatische Andruckzylindervorrichtung (36a, 36b) gehaltert ist, mittels der der Vorformboden (2) und das vom Pegel (22) ausgestaltete Mündungsteil (3) zusammendrückbar sind.

14. Vorformstation nach einem der Ansprüche 7, 8, 12 oder 13, deren Pegel (22) an seiner freien Stirnfläche (31) zumindest eine Stegausnehmung (32) aufweist.

15. Vorformstation nach einem der Ansprüche 1 bis 13, bei der der Vorformboden (2) auf seiner Bodeninnenseite zumindest einen Steg (33) aufweist, dem eine diesen Steg (33) mit Abstand umgebende Stegausnehmung (32) der Stirnseite (35) des der Vorform zugeordneten Pegels (22) der Vorformstation zugeordnet ist.

16. Vorformstation nach Anspruch 15, bei der die einer freien Endkante des Stegs (33) gegenüberliegende Grundfläche der dem Steg (33) zugeordneten Stegausnehmung (32) mit den eine Oberkante des Glasartikelrands ausbildenden Teilen der Vorform (1) fluchtet.

## Claims

1. A preforming station of an IS (individual-section) glass production machine, comprising at least one preform (1), which includes a preform base (2) and a mouth part (3), and a preform holder (4) with preform holder arms (4a, 4b), **characterised in that** the preform base (2) and the mouth part (3) can be brought into contact with one another at their mutually facing edges (5, 6) so that they form the inner contour of the preform (1) without preform halves, and **in that** the preform base (2) and the mouth part (3) are fixed to one another during a pressing process by means of the preform holder arms (4a, 4b).

2. The preforming station according to claim 1, wherein the preform base (2) has a forming section (7) projecting in the direction of the mouth part (3), by means of which a body section (11) of a glass article (10) extending between a base (8) and a mouth (9) thereof can be formed.

3. The preforming station according to claim 1, wherein the mouth part (3) has a forming section (12) projecting in the direction of the preform base (2), by means of which a body section of a glass article (15) extending between a base (13) and a mouth (14) thereof can be formed.

4. The preforming station according to any of claims 1 to 3, wherein the preform base (2) and the mouth part (3) each have a forming section projecting in the direction of the mouth part (3) or the preform base (2), by means of which forming sections a body section of the glass article extending between a base and a mouth of said glass article can be formed.

5. The preforming station according to any of claims 1 to 4, wherein each preform holder arm (4a, 4b) has an upper carrier (17), a lower pressing contact surface (18) of which, when the preform holder (4) is closed, can be brought into pressing contact with an outer pressing contact surface (19) of the preform base (2).

6. The preforming station according to claim 5, wherein the upper-carrier-side pressing contact surface (18) and the preform-base-side pressing contact surface (19) are bevelled.

7. The preforming station according to any of claims 1 to 6, wherein each preform holder arm (4a, 4b) has a lower carrier (20) which, when the preform holder (4) is closed, can be brought into engagement with a recess (21) of a sleeve cylinder structure (23) serving to guide a plunger (22) of the preforming station.

8. The preforming station according to claim 7, wherein a guide surface (36) of the sleeve-cylinder-assembly-side recess (21) and a lower-carrier-side contact surface (24) associated therewith are bevelled.

9. The preforming station according to any of claims 1 to 4, wherein each preform holder arm (4a, 4b) is assigned a clamping lever device (25) by means of which the preform base (2) and the mouth part (3) can be clamped together, a guide (26) being formed on each preform holder arm (4a, 4b), by means of which two clamping levers (27, 28) of the clamping lever device (25) assigned thereto can be moved towards one another for clamping the structure consisting of the preform base (2) and the mouth part (3).

10. The preforming station according to claim 9, wherein each clamping lever device (25) has a spring device (29) by means of which the two clamping levers (27, 28) of the clamping lever device (25) can be removed from one another.

11. The preforming station according to claim 9 or 10, wherein the clamping lever device (25) extends through the preform holder arm (4a, 4b) assigned thereto in the region of the guide (26) and is held outside the preform holder arm (4a, 4b) on a cooling air structure (30) of the preforming station.

12. The preforming station according to claim 1 or 2, wherein the mouth part (3) is formed by an end face (35) of a plunger (22) of the preforming station assigned to the preform (1) and facing the preform base (2).

13. The preforming station according to claim 12, wherein a preferably pneumatic pressure cylinder device (36a, 36b) is mounted on the preform holder arms (4a, 4b), by means of which the preform base (2) and the mouth part (3) formed by the plunger (22) can be pressed together.

14. The preforming station according to any of claims 7, 8, 12 or 13, the plunger (22) of which has at least one extension recess (32) on its free end face (31).

15. The preforming station according to any of claims 1 to 13, wherein the preform base (2) has at least one extension (33) on its inside base, to which an extension recess (32) surrounding this extension (33) at a distance from the end face (35) of the plunger (22) of the preforming station assigned to the preform is assigned.

16. The preforming station according to claim 15, wherein the base surface of the extension recess (32) assigned to the extension (33) opposite a free end edge of the extension (33) is aligned with the parts of the preform (1) forming an upper edge of the glass article edge.

## Revendications

1. Station de préformage d'une machine de production de verre I.S. (Individual Section), comprenant au moins une préforme (1) pourvue d'un fond de préforme (2) et d'une partie embouchure (3), et un porte-préforme (4) pourvu de bras de porte-préforme (4a, 4b), **caractérisée en ce que** le fond de préforme (2) et la partie embouchure (3) peuvent être amené en appui l'un avec l'autre au niveau de leurs bords (5, 6) dirigés l'un vers l'autre de manière à former le contour intérieur de la préforme (1) sans moitiés de préforme, et **en ce que** le fond de préforme (2) et la partie embouchure (3) sont fixés l'un à l'autre lors d'un processus de pressage au moyen des bras de porte-préforme (4a, 4b).

2. Station de préformage selon la revendication 1, dans laquelle le fond de préforme (2) présentant une portion de moulage (7) qui fait saillie en direction de la partie embouchure (3) et au moyen de laquelle une portion de corps (11) d'un article en verre (10), laquelle s'étend entre un fond (8) et une embouchure (9) dudit article, peut être formée.

3. Station de préformage selon la revendication 1, dans laquelle la partie embouchure (3) présente une portion de moule (12) qui fait saillie en direction du fond de préforme (2) et au moyen de laquelle une portion de corps d'un article en verre (15), laquelle s'étend entre un fond (13) et une embouchure (14) dudit article, peut être formée.

4. Station de préformage selon l'une des revendications 1 à 3, dans laquelle le fond de préforme (2) et la partie embouchure (3) présentent chacune une portion de moule qui fait saillie en direction de la partie embouchure (3) ou du fond de préforme (2), portions de moule au moyen desquelles une portion de corps de l'article en verre, laquelle s'étend entre un fond et une embouchure dudit article, peut être formée.

5. Station de préformage selon l'une des revendications 1 à 4, dans laquelle chaque bras de porte-préforme (4a, 4b) comporte un support supérieur (17) qui, lorsque le porte-préforme (4) est fermé, peut être amené en appui sous pression, avec une surface d'appui sous pression inférieure (18), sur une surface d'appui sous pression extérieure (19) du fond de préforme (2).

6. Station de préformage selon la revendication 5, dans laquelle la surface d'appui sous pression côté support supérieure (18) et la surface d'appui sous pression côté fond de préforme (19) sont biseautées.

7. Station de préformage selon l'une des revendications 1 à 6, dans laquelle chaque bras de porte-préforme (4a, 4b) comporte un support inférieur (20) qui, lorsque le porte-préforme (4) est fermé, peut être amené en engagement avec un évidement (21) d'un ensemble cylindre-manchon (23) servant à guider un niveau (22) de la station de préformage.

8. Station de préformage selon la revendication 7, dans laquelle une surface de guidage (36) de l'évidement latéral (21) côté ensemble cylindre-manchon et une surface d'appui (24) côté support inférieur, associée audit évidement, sont biseautées.

9. Station de préformage selon l'une des revendications 1 à 4, dans lequel à chaque bras de porte-préforme (4a, 4b) est associé un dispositif à leviers de serrage (25) qui permet de serrer ensemble le fond de préforme (2) et la partie embouchure (3), un guide (26) étant formé sur chaque bras de porte-préforme (4a, 4b), guide au moyen duquel deux leviers de serrage (27, 28) du dispositif à leviers de serrage (25) qui lui est associé peuvent être rapprochés l'un de l'autre pour serrer la structure constituée du fond de préforme (2) et de la partie embouchure (3).

10. Station de préformage selon la revendication 9, dans lequel chaque dispositif à leviers de serrage (25) comporte un dispositif à ressort (29) au moyen duquel les deux leviers de serrage (27, 28) du dispositif à leviers de serrage (25) peuvent être écartés l'un de l'autre.

11. Station de préformage selon la revendication 9 ou 10, dans laquelle le dispositif à leviers de serrage (25) s'étend à travers le bras de porte-préforme (4a, 4b) qui lui est associé dans la région du guide (26) et est maintenu à l'extérieur du bras de porte-préforme (4a, 4b) sur une structure de refroidissement par air (30) de la station de préformage.

12. Station de préformage selon la revendication 1 ou 2, dans laquelle la partie embouchure (3) est formée par un côté frontal (35) dirigé vers le fond de préforme (2) d'un niveau (22) de la station de préformage qui est associé à la préforme (1).

13. Station de préformage selon la revendication 12, dans laquelle un dispositif formant un cylindre de pression (36a, 36b), de préférence pneumatique, est monté sur les bras de porte-préforme (4a, 4b), dispositif au moyen duquel le fond de préforme (2) et la partie embouchure (3) formée par le niveau (22) peuvent être pressés l'un contre l'autre.

14. Station de préformage selon l'une des revendications 7, 8, 12 ou 13, dont le niveau (22) présente au moins un évidement de bande (32) sur sa face frontale libre (31).

15. Station de préformage selon l'une des revendications 1 à 13, dans laquelle le fond de préforme (2) présente sur son côté intérieur au moins une nervure (33) à laquelle est associé un évidement de nervure (32) du côté frontal (35) du niveau (22) de la station de préformage qui est associé à la préforme, lequel évidement de nervure entoure à distance cette nervure (33).

16. Station de préformage selon la revendication 15, dans laquelle la surface de base de l'évidement de nervure (32) associée à la nervure (33), laquelle surface de base est opposée à un bord d'extrémité libre de la nervure (33), est alignée avec les parties de la préforme (1) qui forment un bord supérieur de la bordure de l'article en verre.
